# EUROPEAN PATENT APPLICATION

(11) **EP 1 262 359 A2**
(43) Date of publication of application: **04.12.2002**
(21) Application number: 02253755.9
(22) Date of filing: 29.05.2002
(51) Int. Cl.: B60K 37/06, B60K 35/00

(54) **Power on/off strategy for in-vehicle multimedia devices using a single power switch**

(30) Priority: 30.05.2001 US 867885
(71) Applicant: Visteon Global Technologies, Inc., Dearborn, Michigan 48126-2490 (US)
(72) Inventor: Tan, Adrian Kon-Min, Farmington Hills, MI 48334 (US); Kosinksi, John Thomas, River Rouge, MI 48218 (US)
(74) Representative: Copp, David Christopher

(57) **Abstract**

A method and system for controlling a multimedia system to activate and deactivate a plurality of multimedia applications. The method includes monitoring a two-level switch, wherein the switch is activated by depressing the switch, determining whether the switch has been depressed, determining whether the multimedia system is active, activating the multimedia system if the system is not active and the switch has been depressed, determining a time duration the switch has been depressed, de-energizing the multimedia system when the switch has been depressed for a predefined time duration, and deactivating one of the plurality of multimedia system applications when the switch has been depressed for less than the predefined time duration.

## Description

### FIELD OF THE INVENTION

The present invention relates to methods for controlling the operation of multimedia systems in automobiles.

### BACKGROUND ART

Many vehicles today and in the future will incorporate multimedia systems which provide the vehicle occupants with a variety of features including but not limited to, cellular telephone, navigational system, radio, compact disc player, and other wireless connections. Typically, this multimedia system has a central controller having an interactive display. The controller typically is located in an instrument panel and replaces a conventional radio. From this one controller and display panel a vehicle occupant may access and control the various features indicated above.

Each feature typically has an on/off stage, however there is generally only one power button for the entire system. A significant short coming of present systems is that the power button is used to turn the entire system on and off and not the individual features of the system. Other prior art systems and methods use menu picks, soft keys, or touch screen controls to selectively turn the individual features or applications on and off.

While these prior art methods can be used effectively, often times a soft key or screen pick cannot be dedicated for each feature. Moreover, placing this frequently used feature in a menu does not provide a user with easy access and maneuverability.

Therefore, a need exists for a system and method for turning on and off a feature of a multimedia system which overcomes these disadvantages. This new and improved method must allow an operator to exit or turn off a feature of the multimedia system without shutting down the entire system.

### SUMMARY OF THE INVENTION

In accordance with an aspect of the present invention, a method for controlling a multimedia system to activate and deactivate a plurality of multimedia applications is provided. The method includes monitoring a two-level switch, wherein the switch is activated by depressing the switch, determining whether the switch has been depressed, determining whether the multimedia system is active, activating the multimedia system if the system is not active and the switch has been depressed, determining a time duration the switch has been depressed, de-energizing the multimedia system when the switch has been depressed for a predefined time duration, and deactivating one of the plurality of multimedia system applications when the switch has been depressed for less than the predefined time duration.

In accordance with another aspect of the present invention, the method further comprises displaying a message on a display screen indicating that the one of the plurality of multimedia system applications has been deactivated.

In accordance with another aspect of the present invention, the method further comprises displaying a message on a display screen indicating that the one of the plurality of multimedia system applications has been activated.

In accordance with another aspect of the present invention, the method further comprises displaying a message on a display screen indicating that the one of the plurality of multimedia system applications has failed to deactivate.

In accordance with another aspect of the present invention, the method further comprises displaying a message on a display screen indicating that the one of the plurality of multimedia system applications has failed to activate.

In accordance with another aspect of the present invention, one of the plurality of multimedia system applications is an in-vehicle phone system.

In accordance with another aspect of the present invention, the one of the plurality of multimedia system applications is an in-vehicle navigational system.

In accordance with another aspect of the present invention, the one of the plurality of multimedia system applications is an in-vehicle stereo system.

In accordance with yet another aspect of the present invention, a system for controlling a multimedia system to activate and deactivate a plurality of multimedia applications is provided. The system includes a depressible switch and a controller in communication with the switch for determining a length of time the switch has been depressed, wherein the depression of the switch for a period of time greater than a predefined time threshold deactivates the multimedia system and wherein the depression of the switch for a period of time less than the predefined threshold deactivates one of the plurality of multimedia system applications.

In accordance with yet another aspect of the present invention, the controller further has an electronic memory for storing executable code for determining the period of time the switch is depressed.

In accordance with yet another aspect of the present invention, a display screen is provided for displaying a message indicating that the one of the plurality of multimedia system applications has been deactivated.

In accordance with yet another aspect of the present invention, a display screen is provided for displaying a message indicating that the one of the plurality of multimedia system applications has failed to activate.

Further objects, features and advantages of the invention will become apparent from consideration of the following description and the appended claims when taken in connection with the accompanying drawings.

### BRIEF DESCRIPTION OF THE DRAWINGS

- Figure 1: is a cut away view of an interior of a vehicle having a multimedia system, in accordance with the present invention;
- Figure 2: is a front view of a multimedia system controller having a display screen, in accordance with the present invention; and
- Figure 3: is a flow chart illustrating a method for controlling the operating state of a plurality of applications or features of a multimedia system, in accordance with the present invention.

### DETAILED DESCRIPTION OF THE PREFERRED EMBODIMENT

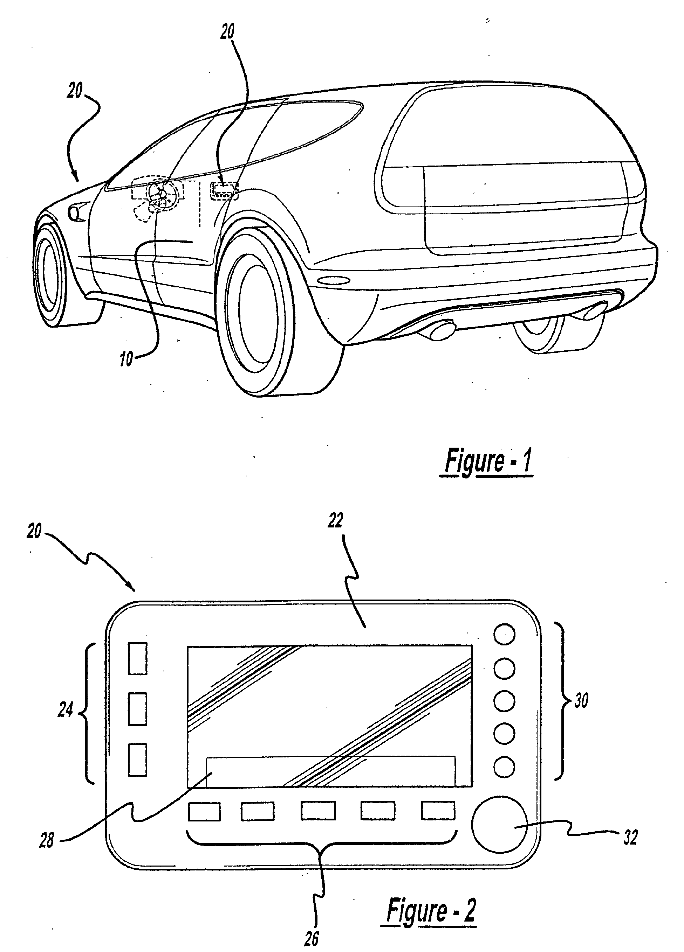

Referring now to Figure 1 a cut away view of an interior 10 of a vehicle 12 is illustrated, in accordance with the present invention. Vehicle 12 is equipped with a multimedia system 14 which provides a vehicle occupant with the capability of controlling multiple system features or applications. Some of the features or applications controllable by multimedia system 14 are, for example, a cellular phone, a radio, a compact disc player, a navigational system, and a wireless connection. Multimedia system 14 generally includes a controller 20 which will be described in greater detail hereinafter. System 14 may also include remote switches, speakers, microphones and other devices for interacting with vehicle occupants. Typically, the controller of multimedia system 14 is located in the instrument panel of vehicle 12 and preferably is centrally located to facilitate interaction by both the driver and passengers of vehicle 12.

Referring now to Figure 2, a more detailed front view of controller 20 of multimedia system 14 is illustrated, in accordance with the present invention. Controller 20 preferably has a display screen 22, a plurality of non-programmable switches or buttons 24, a plurality of reprogrammable buttons or soft keys 26, a plurality of feature or application actuation keys 30, and a system power on/off button 32. The reprogrammable soft keys 26 are associated with a soft key identification area 28 on display screen 22 for selecting and operating various features of multimedia system 20. Preferably, the controller 20 has approximately the same dimensions as a typical vehicle stereo/radio and may be located where the radio is positioned in the instrument panel.

In operation, a vehicle occupant activates system 20 by depressing the power on/off button 32. Once the multimedia system has been powered on, the vehicle occupant may select one of the features or applications of the multimedia system by depressing one of the application keys 30. After an application key 30 has been depressed, the multimedia system will change the operating of the current application that has been activated will be indicated officially through a screen 22. For instance, if the cellular phone application is currently active, the screen 22 will indicate such using text and/or icons. The different features of the application that is currently active may be changed using soft keys 26 and/or non-programmable keys 24.

When a vehicle occupant wishes to switch between features or applications of the multimedia system 14, the occupant simply depresses one of the feature keys 30. This changes which application is currently active. More specifically, the application corresponding to the feature button 30 that the vehicle occupant has depressed will become the active application and the previously active application will continue running in the background and will not be displayed on screen 22. For example, if the vehicle operator is in the phone feature and wishes to change the channel on the radio, the operator would simply depress the radio feature button 30 which would make the radio feature active and place the phone feature in the background. The cellular phone, however, would still be running and may be used simultaneously with the radio and/or any of the other system features.

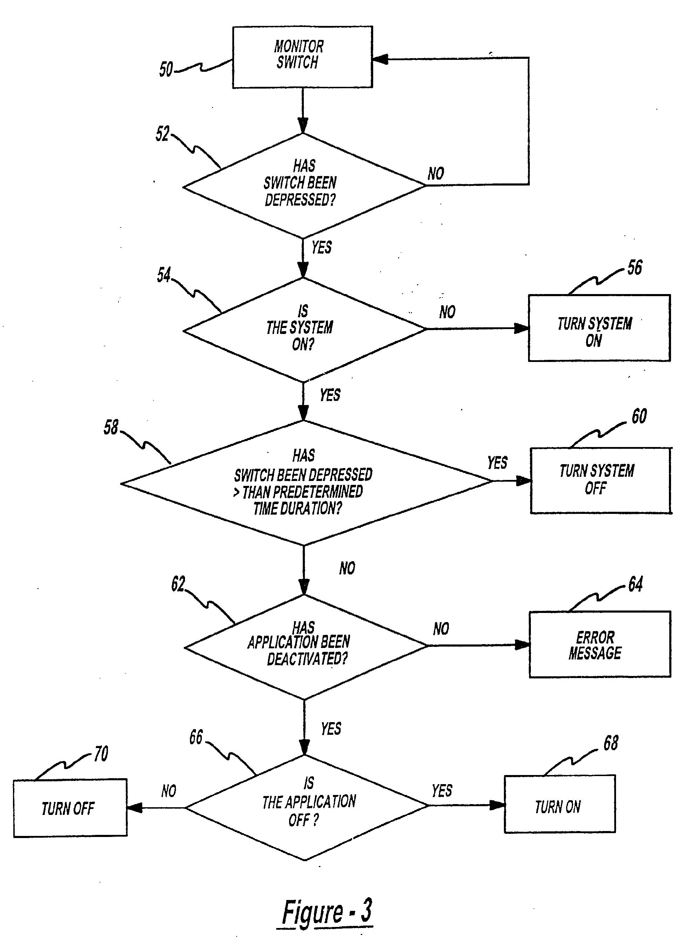

Referring now to Figure 3, the specific operation and method for controlling operational states of the multiple features or applications of the multimedia system will be illustrated in Figure 3, in accordance with the present invention. More specifically, Figure 3 shows, a flow diagram of method for activating and deactivating a plurality of applications or features of multimedia system 14. The method is initiated at block 50 wherein controller 20 monitors the actuation of on/off button 32. At block 52 the controller determines whether the button has been depressed. If the button has not been depressed, the system continues to monitor button 32. However, when the controller determines that the button 32 has been depressed then the controller determines whether the multimedia system 14 is energized, as represented by block 54. If the system is not energized, controller 20 activates system 14, as represented by block 56. However, if the system is on, then the controller determines whether the button has been depressed and held for a time greater than or equal to a power on hold time, as represented by block 58. The power on hold time is a predefined amount of time which may be specified in milliseconds or seconds by the system designer. Of course this predefined hold time may vary depending on customer needs and system requirements. If the controller determines that the power on button 32 has been depressed for greater than or equal to the predefined hold time, the system is deactivated or turned off as represented by block 60. However, if the controller determines that power button 32 has not been depressed and held for a period of time greater than or equal to the predefined hold time, the controller then determines whether the currently active feature or application has been turned off, as represented by block 62. At block 64 the controller displays an error message on screen 22 if the application or feature has not been deactivated or shut off. At block 66, the controller determines whether the application or feature is off or deactivated. If the application is deactivated, the controller turns on the application, as represented by block 68. However, if the application is not turned off, then controller 20 deactivates or shuts down the currently active application, as represented by block 70.

The present invention has many advantages and benefits of the prior art. For example, the present invention provides a multimedia system for an automobile having a power on/off button 32 for activating the entire system and for providing additional activation and deactivation features such as selectively deactivating or activating applications of the multimedia system. Thus, the present invention provides a method and system for an operator to quickly configure the multimedia system in accordance with the operator's wishes by conveniently allowing the operator to energize and de-energize selective features or applications of the multimedia system.

The foregoing discussion discloses and describes a preferred embodiment of the invention. One skilled in the art will readily recognize from such discussion, and from the accompanying drawings and claims, that changes and modifications can be made to the invention without departing from the true spirit and fair scope of the invention as defined in the following claims.

## Claims

1. A method for controlling a multimedia system to activate and deactivate a plurality of multimedia applications, the method comprising:
monitoring a two-level switch, wherein the switch is activated by depressing the switch;
determining whether the switch has been depressed;
determining whether the multimedia system is active;
activating the multimedia system if the system is not active and the switch has been depressed;
determining a time duration the switch has been depressed;
de-energizing the multimedia system when the switch has been depressed for a predefined time duration; and
deactivating one of the plurality of multimedia system applications when the switch has been depressed for less than the predefined time duration.

2. A method as claimed in Claim 1, further comprising displaying a message on a display screen indicating that the one of the plurality of multimedia system applications has been deactivated.

3. A method as claimed in Claim 1 or Claim 2, further comprising displaying a message on a display screen indicating that the one of the plurality of multimedia system applications has been activated.

4. A method as claimed in any preceding claim, further comprising displaying a message on a display screen indicating that the one of the plurality of multimedia system applications has failed to deactivate.

5. A method as claimed in any preceding claim, further comprising displaying a message on a display screen indicating that the one of the plurality of multimedia system applications has failed to activate.

6. A method as claimed in any preceding claim, wherein the one of the plurality of multimedia system applications is an in-vehicle phone system.

7. A method as claimed in any one of Claims 1 to 5, wherein the one of the plurality of multimedia system applications is an in-vehicle navigational system.

8. A method as claimed in any one of Claims 1 to 5, wherein the one of the plurality of multimedia system applications is an in-vehicle stereo system.

9. A system for controlling a multimedia system to activate and deactivate a plurality of multimedia applications, the system comprising:
a depressible switch; and
a controller in communication with the switch for determining a length of time the switch has been depressed, wherein the depression of the switch for a period of time greater than a predefined threshold deactivates the multimedia system and wherein the depression of the switch for a period of time less than the predefined threshold deactivates one of the plurality of multimedia system applications.

10. A system as claimed in Claim 9, wherein the controller further comprises an electronic memory for storing executable code for determining the period of time the switch is depressed.

11. A system as claimed in Claim 9 or Claim 10, further comprising a display screen for displaying a message indicating that the one of the plurality of multimedia system applications has been deactivated.

12. A system as claimed in any one of Claims 9 to 11, further comprising a display screen for displaying a message indicating that the one of the plurality of multimedia system applications has failed to activate.

13. A system as claimed in any one of Claims 9 to 12, wherein the one of the plurality of multimedia system applications is an in-vehicle phone system.

14. A system as claimed in any one of Claims 9 to 12, wherein the one of the plurality of multimedia system applications is an in-vehicle navigational system.

15. A system as claimed in any one of Claims 9 to 12, wherein the one of the plurality of multimedia system applications is an in-vehicle stereo system.
